# EUROPEAN PATENT APPLICATION

(11) **EP 0 577 844 A1**
(43) Date of publication of application: **12.01.1994**
(21) Application number: 93902508.6
(22) Date of filing: 20.01.1993
(51) Int. Cl.: G06F 15/70

(54) **PROCESS FOR SETTING RETRIEVAL WINDOW**

(30) Priority: 27.01.1992 JP 33972/92
(71) Applicant: FANUC LTD., Minamitsuru-gun, Yamanashi 401-05 (JP)
(72) Inventor: WATANABE, Atsushi Room 7-207 Fanuc Manshonharimomi, Minamitsuru-gun, Yamanashi 401-05 (JP); TERAWAKI, F., Room 8-106, Fanuc Manshonharimomi, Minamitsuru-gun, Yamanashi 401-05 (JP); JYUMONJI, Takashi, Fanuc Dai-3 Vira-karamatsu, Minamitsuru-gun, Yamanashi 401-05 (JP)
(74) Representative: Billington, Lawrence Emlyn
(86) International application number: JP9300067
(87) International publication number: WO9315472

(57) **Abstract**

A process for setting a retrieval window used for finding an object surely and quickly by an image processing equipment. Using a reference point G as a center, which is located in a group of sampled detection points Pi, the coordinates of the points Pi are determined in succession anticlockwise. In this order, stored are the coordinates data Qi of the points Pi in a file (S1-S9), and the coordinates data stored in the file are read out in succession in sets of three (S10). If a line segment Qi+1-Qi+2 is not broken to the left of a line segment Qi-Qi+1, the coordinate data Qi+1 is deleted from the file. Hereafter, the processing is similarly repeated, and the coordinate data of the points which are not of the vertexes of a convex polygon are all deleted from the file (S10-S29). The convex polygon obtained by joining together in succession the points of the coordinate value data which are left in the file finally is set on the image processing equipment, as a retrieval window.

## Description

### TECHNICAL FIELD

The present invention relates to a method of setting a retrieval window in an image processing apparatus used for detecting an object.

### BACKGROUND ART

In the fields of automatic machines and industrial robots, detection of an object by an image processing apparatus incorporating a visual sensor is becoming indispensable for effectively performing various processings and operations. Where the objects of detection such as parts are placed in position by one of various transportation means, the positions of such objects tend to show some dispersion depending on the positioning accuracy of the transportation means or the manufacturing accuracy of such parts. It is therefore necessary to appropriately set a retrieval region, i.e. a retrieval window, of the image processing apparatus taking account of the dispersion.

Conventionally, a scanning region of the retrieval window has been determined by an operator's manual setting in anticipation of dispersion of the object. When such a manual setting is not appropriate, especially when the retrieval region is set too narrow, some objects may not be detected due to positional dispersion. On the contrary, if the retrieval region is set too wide, it will cause problems such as a longer scanning operation time for detection of the object.

### DISCLOSURE OF INVENTION

The present invention provides a method of setting a retrieval window by which the object can be detected surely and promptly.

A method of setting a retrieval window according to the present invention comprises steps of: (a) detecting and sampling positions of objects for storing coordinate data representing a plurality of sampled detected points; (b) obtaining, in a coordinate plane, the smallest convex polygon of all the convex polygons including all of a plurality of points detected through said step (a); and (c) automatically setting said convex polygon, obtained through said step (b), as a retrieval region for detecting the object, in the image processing apparatus. With this arrangement, it becomes possible to prevent the retrieval region from being set too wide or too narrow to miss an object, thereby assuring an accurate and prompt detection of the object.

Further, the retrieval window setting method of the present invention comprises steps of: (d) offsetting outward by predetermined amount each side of said convex polygon obtained in said step (b) to obtain a convex polygon formed by offset sides; and setting the convex polygon obtained through said step (d), as the retrieval region, in said image processing apparatus for detection of the object in said step (c).

Processor of an image processing apparatus executes (e) detecting and sampling a position of an object for storing coordinate data representing a plurality of sampled detected points; (f) obtaining, in a coordinate plane, a center-of-gravity point of any three points selected from said detected points through said step (e) and specifying this center-of-gravity point as a reference point residing within a contour of the smallest convex polygon including all the detected points: (g) obtaining straight lines extending from said reference point to each of said detected points and determining the order of detecting said points in the ascending order, from the smallest to the largest, of an angle formed between any one of predetermined half-line and each of said straight lines in a counterclockwise direction, and storing in the order of detection in the file; (h) reading out three detected points from said file in accordance with said order of detection. Then, the processor of the image processing apparatus executes (i) obtaining a segment connecting said first and second points and a segment connecting said second and third points, and making a judgement as to whether or not said segment connecting the second and third points is inclined left with respect to segment connecting the first and the second points.

The processor of the image processing apparatus executes (j) reading out three detected points from said file in accordance with said order of detection so that read-out second point becomes a first point when the result of said judgement in said step (i) is YES, or deleting said second point from said file and reading out three detected points from said file in accordance with said order of detection so that said first point becomes a first point again when the result of said judgement in said step (i) is NO, and said first point is not at the head of said file; or deleting said second point from said file and reading out three detected points from said file in accordance with said order of detection so that said first point becomes a second point when the result of said judgement in said step (i) in NO, and said first point is not at the head of said file.

Still further, the processor of the image processing apparatus executes (k) repeating said steps (i) and (j) until all of said detected points stored in said file have been read out as a second point; (1) obtaining a convex polygon by connecting all the detected points, which remain finally in said file, in accordance with said of detection order; and (m) setting, as a retrieval region for detecting the object, said convex polygon obtained through said step (1) in said image processing apparatus.

Further, through the processing of the step (g), a file can be prepared by determining the order of detection for the points to be detected in the descending order, from the largest to the smallest, of an angle formed counterclockwise between the straight line extending from the reference point to each detected point and a predetermined half-line. In this case, the processor of the image processing apparatus judges, in said step (i), whether the segment connecting the second point and the third point is bent right in relation to the segment connecting the first point and the second point.

### BRIEF DESCRIPTION OF DRAWINGS

Fig. 1 is a block diagram showing an image processing apparatus embodying the method of the present invention;
Fig. 2 is a part of flowchart schematically showing a method of setting a retrieval window using the image processing apparatus of Fig. 1 in accordance with the present invention;
Fig. 3 is a flowchart showing another part of the retrieval window setting method continued from the part shown in Fig. 2;
Fig. 4 is a flowchart showing still another part of the retrieval window setting method continued from the part of Fig. 3;
Fig. 5 is a flowchart showing yet another part of the retrieval window setting method continued from the part of Fig. 4;
Fig. 6 is a view illustrating a file means for the image processing apparatus;
Figs. 7a-7f are views illustrating a change of the state of data contained in the file means; and
Figs. 8a-8s are diagrams showing the dispersion of the points detected through the sampling operation and operating principle according to the embodiment of the present invention.

### BEST MODE FOR CARRYING OUT THE INVENTION

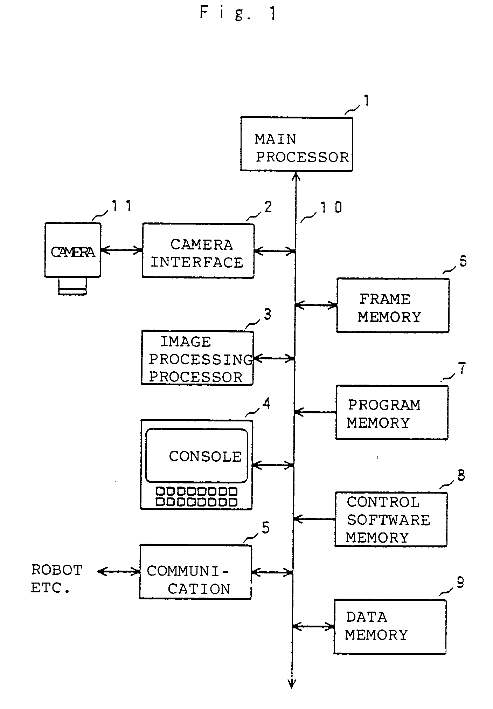

Fig. 1 is a block diagram showing an image processing apparatus in which a retrieval window setting method is embodied in accordance with the present invention. As shown in Fig. 1, there is provided a main processor 1 as a control component of an image processing apparatus. The main processor 1 is connected, through a bus 10, to a camera interface 2, an image processing processor 3, a console 4, a communication interface 5, a frame memory (i.e. an image memory) 6, a program memory 7, a control software memory 8, and a data memory 9. In general, the frame memory 6 and the data memory 9 comprise RAMs; the program memory 7, a non-volatile memory; and the control software memory 8, a ROM.

The camera interface 2 is connected to a camera 11 used for photographing objects to be detected. Images of the objects, obtained through a visual field of the camera 11, are transformed into variable-density images divided into several chromatic tones in terms of a gray scale. The frame memory 6 stores thus transformed images. The image processing processor 3 processings these images. The console 4 is equipped with a liquid crystal display, as well as various command keys and numerical keys used for the operations such as input, editing, registration and execution of application programs. A menu for setting various data or a list for indexing various programs can be displayed on the liquid crystal display.

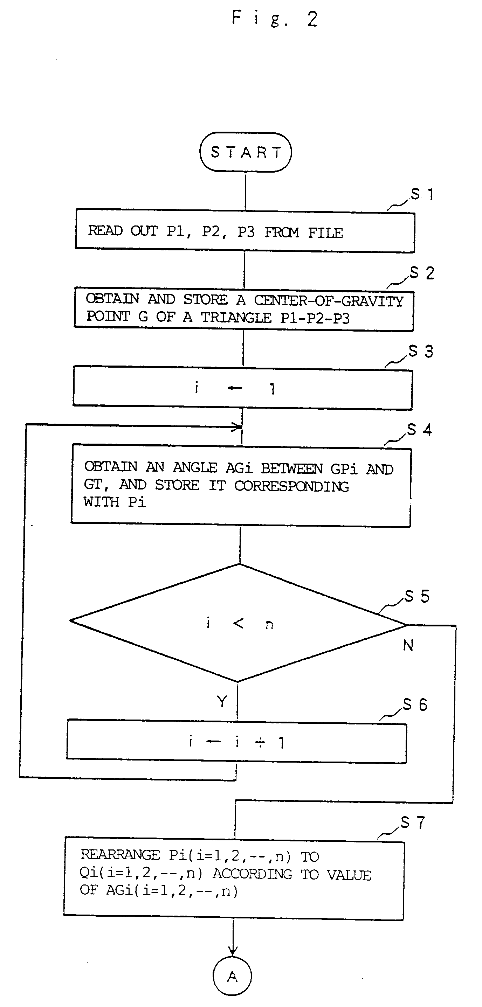

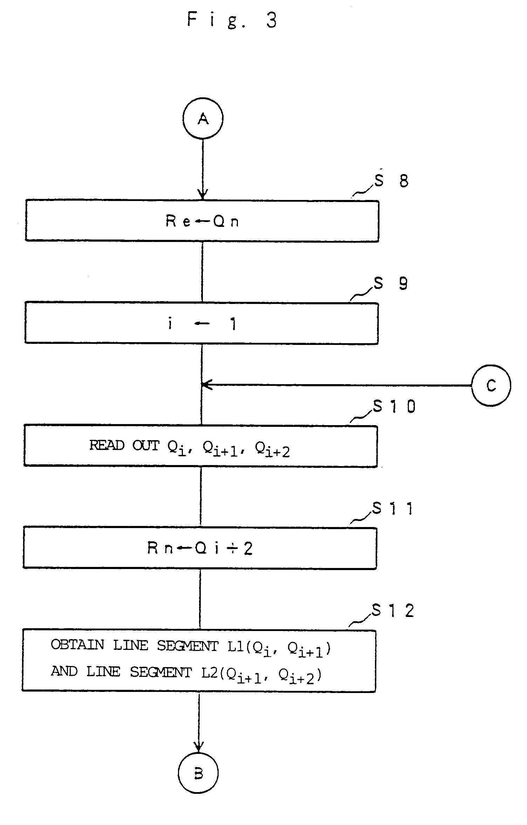

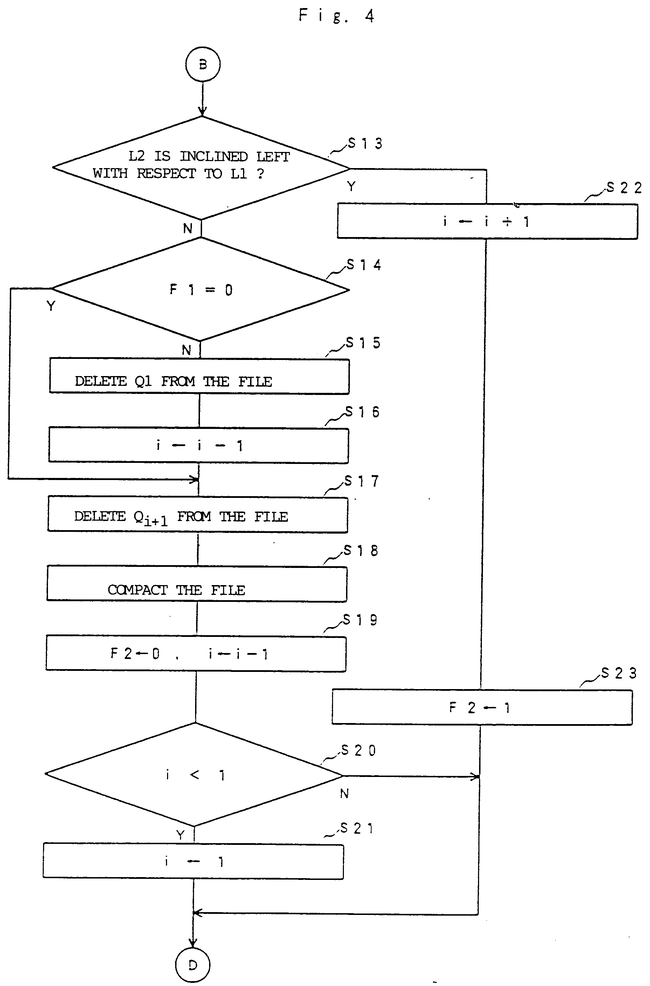

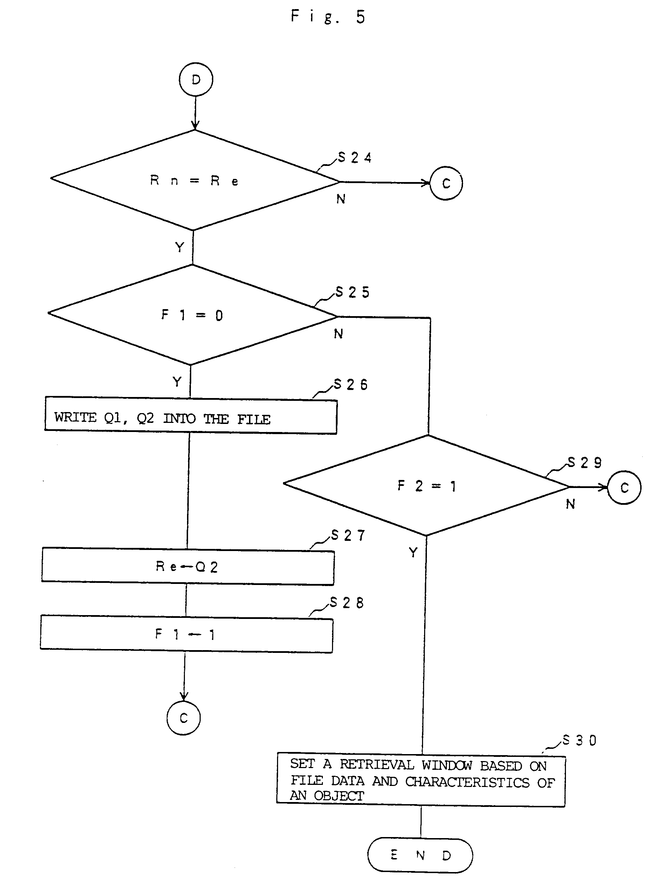

The control software memory 8 stores control programs such as the control program for controlling image processing apparatus through the main processor 1. The program memory 7 stores optional programs created by a user. The communication interface 5 is connected to a system such as an automatic machine or an industrial robot, which utilizes this image processing apparatus. The hardware of the image processing apparatus is substantially identical with that of the conventional one, and so the its detailed description is omitted. Here, one embodiment of the method for setting a retrieval window in accordance with the present invention will be explained with reference to the flowchart shown in Figs. 2-5, which schematically illustrate "processing for the retrieval window setting".

Now, let us suppose that the dispersion in positioning an object is sampled every time the automatic machine or the industrial robot transports the object to a designated place, that a detected point of the object photographed by the camera 11 is stored each time in the frame memory 6 upon completion of locating the object, and that the coordinate data representing each detected point is stored in a file in the data memory 9 in the order of the sampling.

It should be noted that the retrieval region is not decided in the stage of the sampling operation, but all the region of the frame memory 6 is entirely scanned to executed the operation for detecting the object.

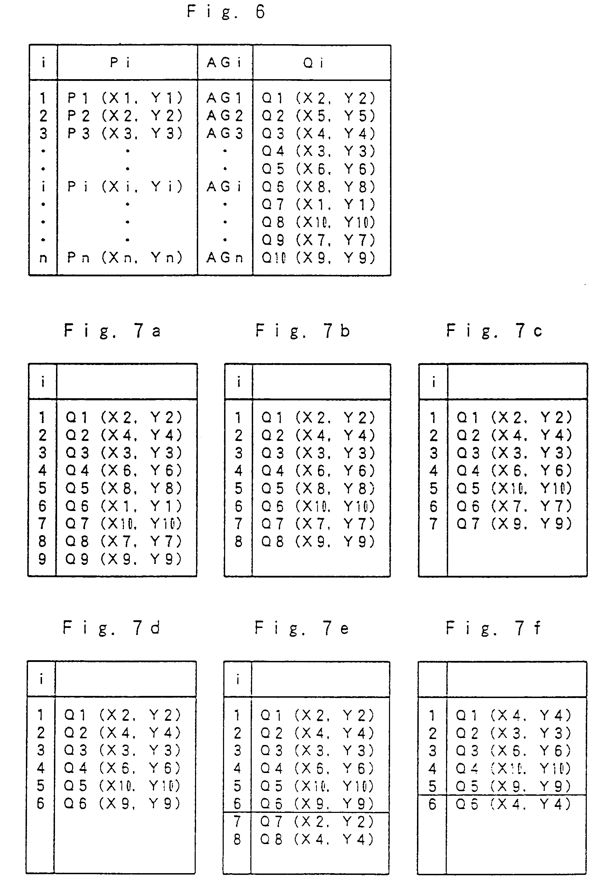

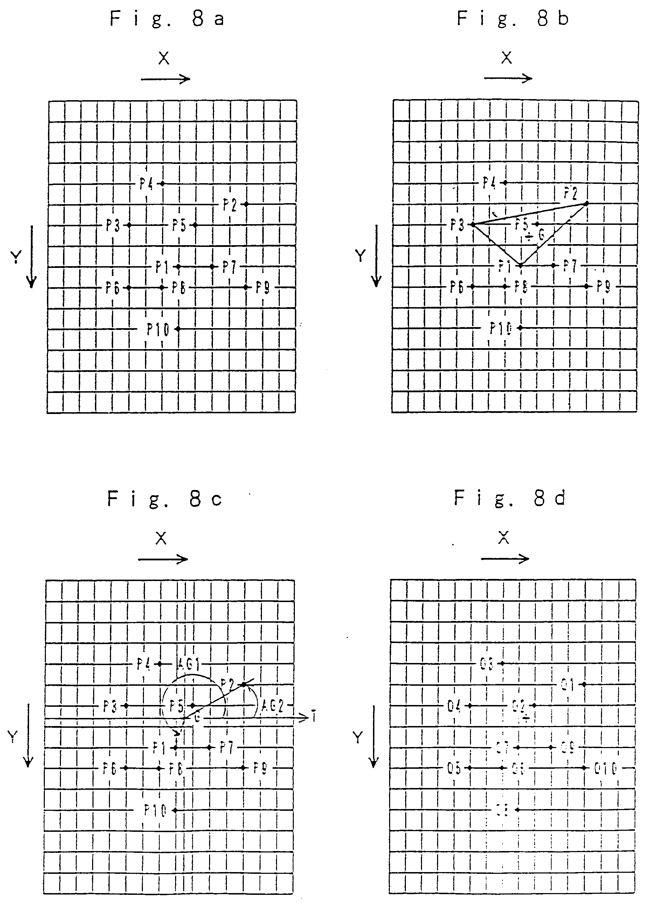

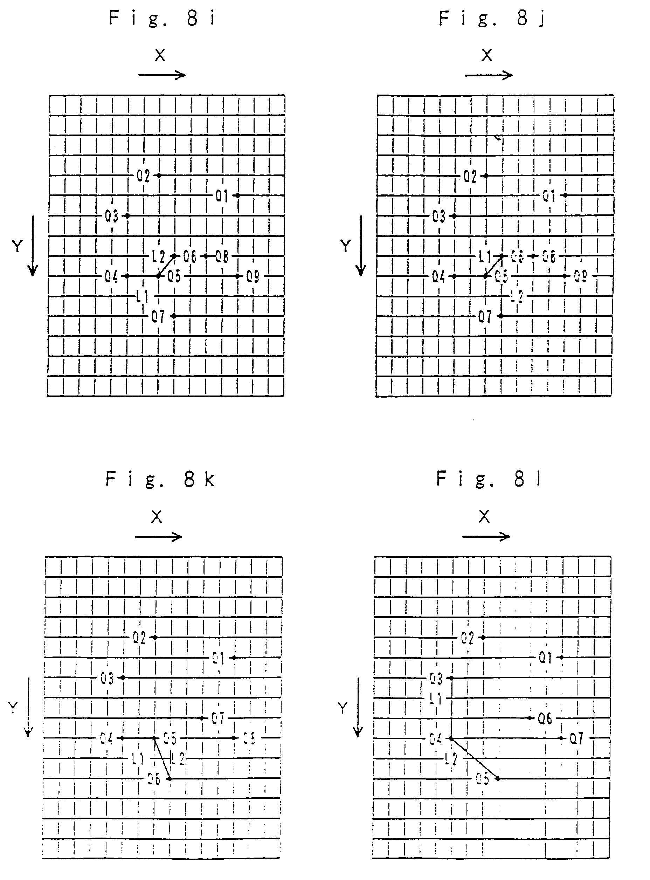

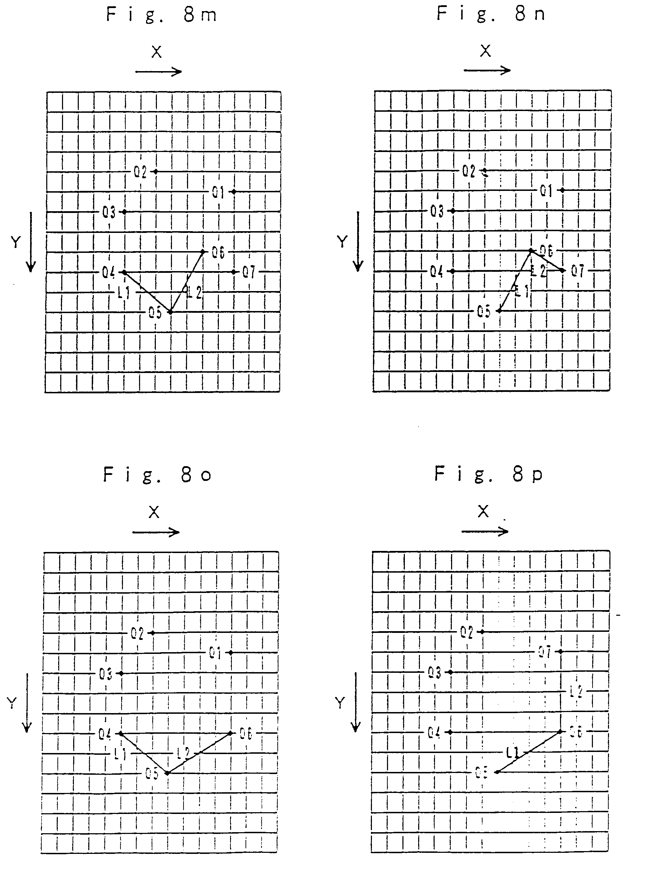

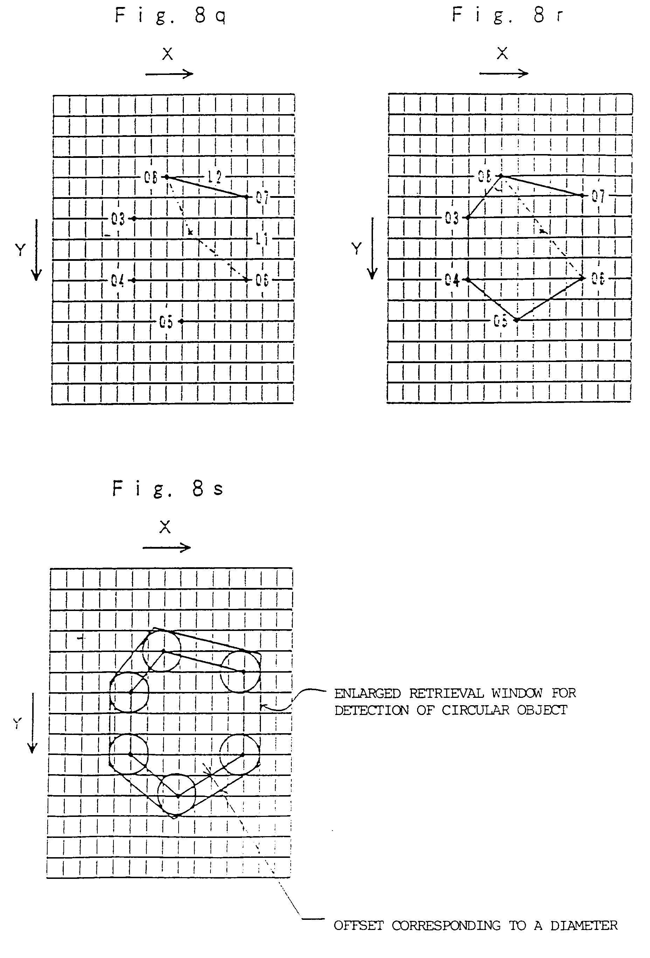

Fig. 8a schematically illustrates dispersion of detected points P1-Pn as a result of n sampling operations. Coordinate values (X1, Y1),----, (Xn, Yn), representing these detected points, are stored in a column Pi of the file means in the order of sampling as shown in Fig. 6. In this embodiment, a sampling number n is "10".

When an operator, after completing the photographing for the sampling, manipulates a command key of the console 4 to run the control software of "the retrieval window setting processing", this causes the main processor 1 to proceed to step S1 to read out the coordinate values of first three points P1, P2, and P3 from the data memory 9, and then to step S2 to obtain a center-of-gravity point G of a triangle whose apexes are formed by the points P1, P2 and P3 to store this center-of-gravity point G as a reference point (Refer to Fig. 8b.).

The center of gravity G always resides within the contour of the triangle P1-P2-P3. Since all the three points P1, P2 and P3 constituting this triangle are selected from the detected points obtained through the sampling operation, the reference point G, i.e. the center of gravity of the triangle P1-P2-P3 always exists within an area of the smallest convex polygon containing all the detected points P1, P2,---, Pn.

The main processor 1 next proceeds to step S3 to set a data retrieval index i to "1", and then proceeds to a step S4 to read the coordinate value (Xi, Yi) of the detected point Pi, representing i-th sampling data, in accordance with the specified data retrieval index i. In this step S4, a half-line GPi extending from the reference point G to the detected point Pi is identified and, an angle AG; between the half-line GPi and the half-line GT is calculated in a counterclockwise direction (Fig. 8c). The obtained angle AGi is stored in a column AGi of the file corresponding to the coordinate value (Xi, Yi) of the detected point P1.

The half line GT as a reference for determining the order for detecting the point Pi is parallel to an X-axis and extends from the reference point G toward the direction of positive values of X-axis.

Next, the main processor 1 proceeds to step S5 to judge whether or not the value of the data retrieval index i is smaller than the sampling number n. If smaller, the main processor 1 increments the index i successively in step S6, and repeats the processing of the step S4 until the value of the index i agrees with the sampling number n. In other words, the angle AGi, defined as an angle of the half line GPi measured in a counterclockwise direction with respect to the half line GT, is obtained with respect to each of all the detected points Pi (i=1,2,---,n). Thus obtained angles AGi are stored in a column AGi of the file means in connection with the coordinate values (Xi, Yi) of the detected points Pi (Refer to the column AGi of Fig. 6).

The main processor 1 subsequently proceeds to a step S7 to rearrange the coordinate data (Xi, Yi) in the ascending order of the degree (i.e. the smallest to the largest) of the angle AGi corresponding to each coordinate data (Xi, Yi). The rearranged coordinate data (Xi, Yi) are then stored in column Qi of the file means as shown in Fig. 6.

In an example shown in Fig. 8c, an angle AG2 formed between the half line GT and a GP2 extended from the reference point G to the detected point P2 is the smallest angle when measured from the reference point G in the counterclockwise direction, so that the coordinate value (X2, Y2) is stored in the head of the column Q1 as a value of the point Q1. On the other hand, an angle AG1 formed between the half line GT and a GP1 extending from the reference point G to the detected point P1 is the 7th smallest angle when measured from the reference point G in the counterclockwise direction, so that the coordinate value (X1, Y1) is stored in the 7th level from the top of the column Qi as a value of the point Q7. In this manner, the coordinate values of the detected points P2, P5, P4, P3, P6, P8, P1, P10, P7 and P9 are stored as the coordinate values of points Q1, Q2, Q3, Q4, Q5, Q6, Q7, Q8, Q9 and Q10, respectively in the order named as shown in Figs. 8c and 8d. With this processing, the coordinate values (Xi, Yi) lined up in the Pi column are rearranged in the Qi column in the ascending order by the degree of the angles AGi formed in the counterclockwise direction between the half line GT to the semi-half line GPi, thereby determining the order of detection in the present embodiment.

After completing the rearrangement of coordinate data, the main processor 1 proceeds to step S8 to store the coordinate value of the last point Qn into a final point register Re. The last point Qn has been registered in the bottom of the file means. In case of the example shown in Fig. 8d, the point Q10 of Qi column in Fig. 6, that is, the coordinate value of the point P9 coordinate value (X9, Y9) of the detected point P9 is stored into the final point register Re.

Next, the main processor 1 proceeds to step S9 to set the data retrieval index i to "1". Then, the main processor 1 proceeds to step S10 to read out the coordinate values of the points Qᵢ, Qᵢ₊₁, and Qᵢ₊₂ from the Qi column of the file means as first, second and third points. As a present value of the index i is 1, the coordinate values of the points Q1, Q2 and Q3 are respectively read out (from the file means).

Next, the main processor 1 proceeds to step S11 to store the coordinate value of the point Qᵢ₊₂, that is, the data of the last point having been read out at present, into a present point register Rn.

Subsequently, the main processor 1 proceeds to a step S12 to obtain a line segment L1 connecting the first point Qᵢ and the second point Qᵢ₊₁ and a line segment L2 connecting the second point Qᵢ₊₁ and the third point Qᵢ₊₂. The present processing specifies the line segment L1 as a line segment connecting the point Q1 (X2, Y2) and the point Q2 (X5, Y5), and also specifies the line segment L2 as a line segment connecting the point Q2 (X5, Y5) and the point Q3 (X4, Y4) (Refer to Fig. 8e).

Next, the main processor 1 proceeds to a step S13 to make a judgement as to whether or not the line segment L2 is inclined left with respect to the line segment L1. This judgement is carried out by regarding the line segments L1 and L2 as vectors and judging the direction or sign of the outer product of the two vectors L1 and L2. In this case, an angle between the two vectors L1 and L2 is considered to be formed in either clockwise or counterclockwise direction in determining the outer product. Then, the direction of the bend is judged by the sign of the outer product of the vectors.

The line segment L2 being inclined left with respect to the line segment L1 means that the direction of a vector representing the line segment L2, which extends from the point Q2 to the point Q3, inclines left with respect to a vector representing the line segment L1, which extends from the point Q1 to the point Q2. As the present embodiment detects all the points Q1, Q2,---, Qn successively in a counterclockwise direction, it can be concluded that the line segments L1 and L2 constitute adjacent two sides of a convex polygon insofar as the line segment L2 is inclined left with respect to the line segment L1.

If the line segment L2 is not inclined left with respect to the line segment L1, the main processor 1 proceeds to a step S14 to make a judgement whether or not a final point connection confirmation flag F1 is reset to "0". As shown in Fig. 8e, the line segment L2 is inclined right with respect to the line segment L1 in this embodiment, so that the main processor 1 proceeds to the step S14. As the flag F1 is already reset to "0" as an initial value, the main processor 1 proceeds to step S17 to delete the coordinate value of the second point Qᵢ₊₁ from the file.

Then, the main processor 1 proceeds to a step S18 to shift upward all the coordinate data succeeding Qᵢ₊₁ one by one in the Qi column so as to fill up the vacant address occurred by the deletion of the coordinate data of the second point Qᵢ₊₁. As the present value of the index i equals "1", the coordinate value (X5, Y5) of the point Q2 is deleted from the Qi column of the file means. As a result, the content of the Qi column of Fig. 6 changes to the state of Fig. 7a.

Namely, any of the rearranged points Q1, Q2,---, Qn, which does not constitute an apex of a convex polygon encircling all the points Q1, Q2,---, Qn, is excluded. In more detail, each of the rearranged points Q1, Q2, ---, Qn is detected successively so as to obtain a convex polygon by connecting or tying these points Q1, Q2,----, Qn in the counterclockwise direction about the reference point G which is positioned in a region including the sampled detected points Pi, P2,----, Pn. If any of points Q1, Q2, ---, Qn retracts inward to crush or break the convex polygon, it is concluded that this point does not constitute an apex of the convex polygon encircling all the points Q1, Q2, ---, Qn. In this respect, the point Q2 in this processing is not recognized as an apex constituting the convex polygon. Hence, the data of the point Q2 is eliminated from the file means.

After the point Q2 is excluded from the column Qi, the coordinate data of each detected point is reassigned a new point name Qi according to the corresponding index i. For example, the coordinate data (X4,Y4), which used to be stored as the point Q3 in Fig. 6, is newly assigned as a point Q2 in Fig. 7a as a result of data shift. In the same way, another coordinate value stored as the point Qᵢ in Fig. 6 is newly assigned as a point Qᵢ₋₁, where 3 ≦ i ≦ 10.

Next, the main processor 1 proceeds step S19 to reset a left-inclined confirmation flag F2 to "0". This left-inclined confirmation flag F2 indicates if the presently inputted second point Qᵢ₊₁ constitutes an element of the convex polygon including all the external detected points or not. The main processor 1 also decrements the data retrieval index i by 1 in this step S19. As the present value of the index i equals "1", the index i becomes "0" as a result of the decrement.

Thereafter, the main processor 1 proceeds to step S20 to make a judgement whether or not the index i is smaller than "1", or if the point Qᵢ referred to as the first point in this processing is located in the head (i.e. top) of the file means or not. As the present value of the index i equals "0", it is concluded that the point Q1 referred to as the first point in this processing exists in the top of the file means.

Then, the main processor 1 proceeds to step S21 to set the data retrieval index i to "1", so that the coordinate data of the point Q1 is again read out as a first point in the next processing.

Subsequently, the main processor 1 proceeds to step S24 to make a judgement as to whether or not the coordinate value stored in the present point register Rn is identical with the coordinate value stored in the final point register Re. More specifically, it is judged if the coordinate data of the third point Qᵢ₊₂ referred in this processing is identical with the coordinate data of the final point Qn. In this processing, the coordinate value (X4, Y4) of the point Q3, shown in Fig. 6, is read out as the third point. As this coordinate value does not agree with the coordinate value (X9, Y9) of the point Q10, the main processor 1 returns to the step S10.

The main processor 1 again reads out the coordinate values of the points Q1, Q2 and Q3 from the Qi column of the file means as the first, second and third points based on the present value "1" of the index i. In this instance, content of the Qi column of the file means has been changed into the state of Fig. 7a. Therefore, the coordinate value (X2, Y2) of the detected point P2 is read out as a point Q1; the coordinate value (X4, Y4) of the detected point P4 as a point Q2; and the coordinate value (X3, Y3) of the detected point P3 as a point Q3.

Next, the main processor 1 proceeds to the step S11 to store the coordinate value of the point Qᵢ₊₂, i.e. the coordinate value of the point Q3, into the present point register Rn. Subsequently, the main processor 1 proceeds to the step S12 to obtain a line segment L1 connecting the first point Q1 and the second point Q2 and a line segment L2 connecting the second point Q2 and the third point Q3.

Next, the main processor 1 proceeds to the step S13 to make a judgement as to whether or not the line segment L2 is inclined left with respect to the line segment L1. As the line segment L2 is inclined left with respect to the line segment L1 as shown in Fig. 8f, the main processor 1 proceeds to step S22 to increment the data retrieval index i so that the coordinate value of the second point referred to in this processing is read out as a first point from the file means in the next processing.

In successively detecting the points, which have been rearranged with respect to the reference point G located within the sampled detected points P1-Pn, in the counterclockwise direction, it is concluded that a point constituting an apex projecting towards the outside of the detected points, or the second Q2 in this processing is concluded to be an element of the convex polygon connecting the outermost detected points, and stored in the file as it is.

Next, the main processor 1 proceeds to step S23 to set the left-inclined confirmation flag F2 to "1", and stores the second point Qᵢ₊₁ as being an element of the convex polygon connecting the outermost detected points in this processing.

Subsequently, the main processor 1 proceeds to the step S24 to make a judgement as to whether or not the coordinate data stored in the present point register Rn is identical with the coordinate data stored in the final point register Re. In this processing, the coordinate value (X3, Y3) of the point Q3 read out as the third point does not agree with the coordinate value (X9, Y9) of the point Q9, so that the main processor 1 returns to the step S10.

After returning to the step S10, the main processor 1 newly reads out the coordinate values (X4, Y4), (X3, Y3), and (X6, Y6) of the points Q2, Q3 and Q4 from the Qi column of the file means of Fig. 7a as the first, second and third points, respectively, based on the present value "2" of the index i, which has been incremented in the processing of step 22.

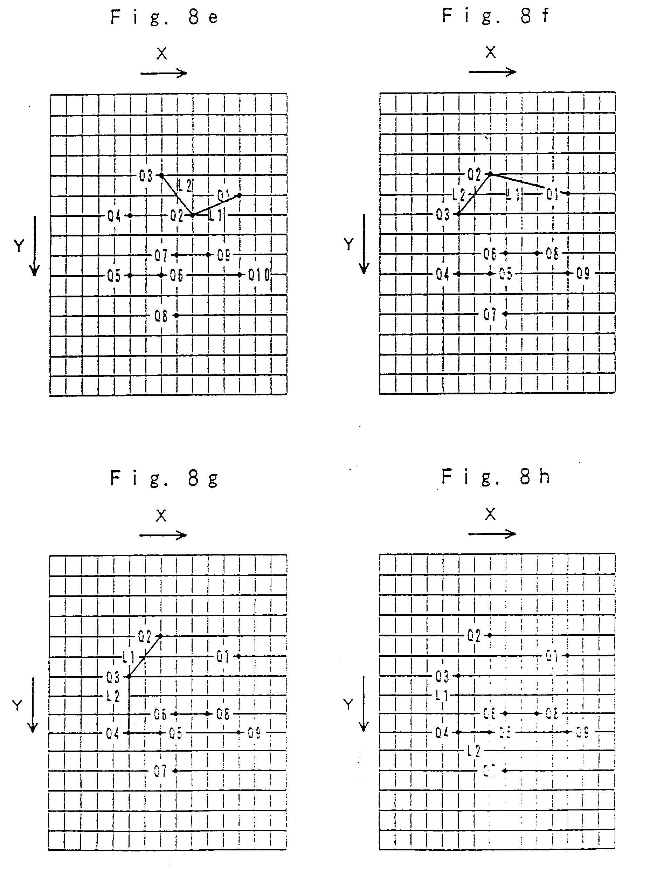

As shown in Fig. 8g, in this embodiment, the line segment L2 connecting the second point Q3 and the third point Q4 is inclined left with respect to the line segment L1 connecting the first point Q2 and the second point Q3, so that the main processor 1 proceeds to the steps S10-S13, and S22-S24 and then returns again to the step S10.

Then, the main processor 1 newly reads out the coordinate values of the points Q3, Q4 and Q5 from the file means shown in Fig. 7a as the first, second and third points, respectively, based on the present value "3" of the index i, which has been incremented in the step S22 (Refer to Fig. 8h).

The data retrieval index i is subsequently incremented to be "4". Even when the coordinate values of the points Q4, Q5 and Q6 are read out as the first, second and third points, respectively, the line segment L2 is inclined left with respect to the line segment L1, so that the main processor 1 repeats the same processing (Refer to Fig. 8i.

However, when the data retrieval index i is incremented to "5" in the step S22, and, the coordinate values of the points Q5, Q6 and Q7 are read out from the file means of Fig. 7a as the first, second, and third points, respectively, the line segment L2 connecting the second point Q6 and the third point Q7 is inclined right with respect to the line segment L1 connecting the first point Q5 and the second point Q6 (Refer to Fig. 8j).

Accordingly, the judgement in the step S13 is "NO", and, therefore, the main processor 1 proceeds to the step S14 to make a judgement as to whether or not the final point connection confirmation flag F1 is reset to "0" after completing the judgement in step 13. As the flag F1 is already reset to "0" as an initial value, the main processor 1 proceeds to the step S17 to delete the coordinate value of the second point Q6 from the file means in the same manner as the previous processing.

Then, the main processor 1 proceeds to the step S18 to fill up the vacant address occurred by the deletion of the coordinate data of the point Q6. As the present value of the index i equals "5", the coordinate value (X1, Y1) of the point Q6 is deleted from the Qi column of the file means in the example of Fig. 8j. As a result, the content of the Qi column of Fig. 7a changes to the state of Fig. 7b.

The coordinate data (X10,Y10) of the detected point P10, which was stored as the point Q7 in Fig. 7a, is newly assigned by the name of point Q6 in Fig. 7b as a result of data shift. In the same way, each coordinate value stored as the point Qᵢ in the state of Fig. 7a is newly assigned as a point Qᵢ₋₁, where 7 ≦ i ≦ 9.

Next, the main processor 1 proceeds to the step S19 to reset the left-inclined confirmation flag F2 to "0". The main processor 1 decrements the data retrieval index i by 1 in this step S20, and makes a judgement of whether or not the index i is less than "1". As the present value of the index i equals "4", it is concluded that the point Q5 referred as the first point in this processing does not exist in the head of the file means. The main processor 1 thus maintains "4" as the value of index i. Accordingly, the point Q5 (X8, Y8) in Fig. 7a, which has been the first point in this processing, is stored so as to be read out as a second point in the next processing.

Subsequently, the main processor 1 proceeds to the step S24 to make a judgement as to whether or not the coordinate value stored in the present point register Rn is identical with the coordinate value stored in the final point register Re. In this processing, the coordinate value of the third point Q7 does not agree with the coordinate value of the point Q9 (X9, Y9), so that the main processor 1 returns to the step S10.

After returning to the step S10, the main processor 1 newly reads out the coordinate values of the points Q4, Q5 and Q6 from the Qi column of the file means as the first, second and third points, respectively, based on the present value "4" of the index i. As the content of the column Qi of the file means is changed to the state of Fig. 7b, the coordinate data of the detected point P6 is read out as a point Q4; the coordinate data of the detected point P8, as a point Q5; and, the coordinate data of the detected point P10, as a point Q6.

In this case, as shown in Fig. 8K, the line segment L2 connecting the second point Q5 and the third point Q6 is inclined right with respect to the line segment L1 connecting the first point Q4 and the second point Q5, so that the judgement in the step S13 will be "NO", and thus the main processor 1 proceeds to the step S14 to make a judgement as to whether or not the final point connection confirmation flag F1 is reset to "0". As the flag F1 is already reset to "0" as an initial value, the main processor 1 proceeds to the step S17 to delete the coordinate value of the second point Q5 from the file means in the same manner as the previous processing.

Then, the main processor 1 proceeds to the step S18 to fill up the vacant address occurred by the deletion of the coordinate data of the point Q5. As the present value of the index i equals "4", the coordinate value (X8, Y8) of the point Q5 is deleted from the Qi column of the file means in the example of Fig. 8k. As a result, the content of the Qi column of Fig. 7b changes to the state of Fig. 7c.

The coordinate data (X10,Y10), which has been stored as the point Q6 in Fig. 7b, is newly assigned as a point Q5 in Fig. 7c as a result of data shift. In the same way, each coordinate value stored as the point Qᵢ in Fig. 7b is newly assigned as a point Qᵢ₋₁, where 6 ≦ i ≦ 8.

Next, the main processor 1 proceeds to the step S19 to reset the left-inclined confirmation flag F2 to "0", and decrements the data retrieval index i to "3". Then, the main processor 1 proceeds to the step S20 to judge whether or not the coordinate data of the point Q4 referred to as the first point exists in the head of the file means. As the point Q4 does not exists in the head of the file means, the main processor 1 maintains the index i at a value of "3". Accordingly, the point Q4, which has been the first point in this processing, is stored so as to be read out as a second point in the next processing.

Subsequently, the main processor 1 proceeds to the step S24 to make a judgement as to whether or not the coordinate value stored in the present point register Rn is identical with the coordinate value stored in the final point register Re. In this processing, the coordinate value of the third point Q6 (X10, Y10) does not agree with the coordinate value of the final point Q8 (X9, Y9) stored in the file means, so that the main processor 1 returns to the step S10.

After returning to the step S10, the main processor 1 newly reads out the coordinate values of the points Q3, Q4, and Q5 from the Qi column of the file means as the first, second and third points, respectively, based on the present value "3" of the index i. As the content of the column Qi of the file means has been changed to the state of Fig. 7c, the coordinate data of the detected point P3 is read out as a point Q3; the coordinate data of the detected point P6, as a point Q4; and, the coordinate data of the detected point P10, as a point Q5.

As shown in Fig. 81, the line segment L2 connecting the second point Q4 and the third point Q5 is inclined left with respect to the line segment L1 connecting the first point Q3 and the second point Q4, and thus the main processor proceeds to the step S22 to increment the index i by 1 to "4" so that the coordinate data referred to as the second point is read out from the file means as a first point in the next processing.

Next, the main processor 1 proceeds to the step S23 to set the left-inclined confirmation flag F2 to "1", and thereafter proceeds to the step S24 to make a judgement as to whether or not the coordinate value stored in the present point register Rn is identical with the coordinate value stored in the final point register Re. In this processing, the coordinate value of the third point Q5 (X10, Y10) does not agree with the coordinate value of the final point (X9, Y9) stored in the file means, so that the main processor 1 returns to the step S10.

After returning to the step S10, the main processor 1 newly reads out the coordinate values of the points Q4, Q5, and Q6 from the Qi column of the file means shown in Fig. 7c as the first, second and third points, respectively, based on the present value "4" of the index i which has been incremented in the step S22. In this case, the coordinate data of the detected point P6 is read out as a point Q4; the coordinate data of the detected point P10, as a point Q5; and the coordinate data of the detected point P7, as a point Q6.

As shown in Fig. 8m, the line segment L2 connecting the second point Q5 and the third point Q6 is inclined left with respect to the line segment L1 connecting the first point Q4 and the second point Q5, so that the main processor 1 repeats the processing of the steps S10-S13 and S22-S24 in the manner as the previous processing.

Then, based on the data retrieval index i which has been incremented to "5" in the step S22, the coordinate values of the detected points P10, P7 and P9 are read out as the first, second and third points Q5, Q6 and Q7, respectively by the main processor 1 which has returned to step 10.

As shown in Fig. 8n, in this case, the line segment L2 connecting the second point Q6 and the third point Q7 is inclined right with respect to the line segment L1 connecting the first point Q5 and the second point Q6. Therefore, the judgement in the step S13 is "NO", and therefore the main processor 1 proceeds to the step S14 to make a judgement as to whether or not the final point connection confirmation flag F1 is reset to "0". As the flag F1 is already reset to "0" as an initial value, the main processor 1 proceeds to the step S17 to delete the coordinate value of the second point Q6 from the file means in the same manner as the previous processing.

Then, the main processor 1 proceeds to the step S18 to fill up the vacant address occurred by the deletion of the coordinate data of the point Q6. More particularly, the coordinate value (X7, Y7) of the point Q6 is deleted from the Qi column of the file means. As a result, the content of the Qi column of Fig. 7c changes to the state of Fig. 7d. The coordinate data (X9, Y9) of the detected point P9, which has been stored as the point Q7 in Fig. 7c, is newly assigned as a point Q6 in Fig. 7d as a result of data shift. Next, the main processor 1 proceeds to the step S19 to reset the left-inclined confirmation flag F2 to "0", and decrements the data retrieval index i to "4". Then, the main processor 1 proceeds to the step S20 to make a judgement as to whether or not the coordinate data of the point Q5 referred to as the first point exists in the head of the file means. As the first point Q5 does not exists in head top of the file means, the main processor 1 maintains the index i at a value "4". Accordingly, the point Q5 (X10, Y10) in Fig. 7c, which has been the first point in this processing, is stored so as to be read out as a second point in the next processing.

Subsequently, the main processor 1 proceeds to the step S24 to make a judgement as to whether or not the coordinate value stored in the present point register Rn is identical with the coordinate value stored in the final point register Re.

In this processing, the third point corresponds to the point Q7 (X9, Y9) shown in the file means of Fig. 7c. This point Q7 agrees with the final point (X9, Y9) stored in the file means. Hence, the main processor 1 proceeds to a step S25 to make a judgement as to whether or not the final point connection confirmation flag F1 is reset to "0". As the flag F1 is reset to "0", the main processor 1 proceeds to step S26 to additionally register coordinate values of the two points Q1 and Q2, which are presently stored in the top two addresses of the file means (Refer to Fig. 7e).

Then, in step 27, the coordinate data (X4, Y4) of point Q8 (=Q2) located in the bottom of the updated file is updated and stored in the final point register Re through the main processor 1. Then, the main processor 1 proceeds to a step S28 to set the final point connection confirmation flag F1 to "1", and thereafter returns to the step S10. As a result, the content of Fig. 7d changes to the state of Fig. 7e. The coordinate data (X4, Y4) of the detected point P4 is stored in the final point register Re as an element of the convex polygon formed by connecting outermost detected points.

After returning to the step S10, the main processor 1 newly reads out the coordinate values of the points Q4, Q5 and Q6 from the Qi column of the file means as the first, second and third points, respectively, based on the present value "4" of the index i. At this moment, the data of the Qi column of the file means is changed to the state of Fig. 7e. Therefore, the coordinate data of the detected point P6 is read out as a point Q4; the coordinate data of the detected point P10, as a point Q5; and the coordinate data of the detected point P9, as a point Q6.

As shown in Fig. 8o, the line segment L2 connecting the second point Q5 and the third point Q6 is inclined left with respect to the line segment L1 connecting the first point Q4 and the second point Q5. The main processor 1, therefore, increments the data retrieval index i by 1 to "5" so that the coordinate data of the point Q5, which has been as the second point in this processing, is read out as a first point in the next processing (Step S22).

The main processor 1, thereafter, proceeds to the step S23 to set the left-inclined confirmation flag F2 to "1" to store that the second point Q5, inputted in this processing, is an element of the convex polygon to be obtained formed by connecting the outermost detected points. Subsequently, the main processor 1 proceeds to the step S24 to make a judgement as to whether or not the coordinate data stored in the present point register Rn is identical with the coordinate data stored in the final point register Re. In this processing, the coordinate value (X9, Y9) of the point Q6 is read out as the third point. The third point Q6 (X9, Y9) does not agree with the coordinate value (X4, Y4) stored in the bottom of the file means, so that the main processor 1 returns to the step S10.

After returning to the step S10, the main processor 1 newly reads out the coordinate values of the points Q5, Q6 and Q7 from the Qi column of the file means shown in Fig. 7e as the first, second and third points, respectively, based on the present value "5" of the index i which has been incremented in the step S22. In this case, the coordinate data of the detected point P10 is read out as a point Q5; the coordinate data of the detected point P9, as a point Q6; and the coordinate data of the detected point P2, as a point Q7.

As shown in Fig. 8p, the line segment L2 connecting the second point Q6 and the third point Q7 is inclined left with respect to the line segment L1 connecting the first point Q5 and the second point Q6. The main processor 1, therefore, repeats the processings of the steps S10-S13 and S22-S24 in the same manner as the previous processing.

Thereafter, the data retrieval index i is incremented to "6" in the step S22. Subsequently, the main processor 1 returns to the step S10, and the coordinate values of the detected points P9, P2 and P4 are read out as the first, second and third points Q6, Q7 and Q8, respectively.

As shown with solid lines in Fig. 8q, the line segment L2 connecting the second point Q7 and the third point Q8 is inclined left with respect to the line segment L1 connecting the first point Q6 and the second point Q7. Therefore, the judgement in the step S13 turns to "YES", and the main processor 1 executes the processing of the step S22, and sets the left-inclined confirmation flag F2 to "1" in the step S23.

Subsequently, the main processor 1 proceeds to the step S24 to make a judgement as to whether or not the coordinate data stored in the present point register Rn is identical with the coordinate data stored in the final point register Re. More particularly, it is judged if the third point Q8 in the present processing is identical with the point (X4, Y4) stored in the bottom of the file means, or identical with the coordinate data of detected point P4, which has first been confirmed as an element of the convex polygon formed by connecting outermost detected points. In the processing, the coordinate value (X4, Y4) of the point Q8, shown in Fig. 7e, is read out as the third point. As the third point Q8 (X4, Y4) agrees with the coordinate value (X4, Y4) stored in the bottom of the file means as an element of the convex polygon formed by connecting outermost detected point, the main processor 1 proceeds to the step S25 to make a judgement as to whether or not the final point connection confirmation flag F1 is reset to "0".

As the flag F1 is previously set to "1", the main processor 1 proceeds to a step S29 to make a judgement as to whether or not the left-inclined flag F2 is set to "1". More particularly, it is judged whether or not the line segment L2 connecting the unconfirmed point Q7 (the detected point P2) and the point Q8 (the detected point P4), which has been confirmed as an element of the convex polygon, is inclined left with respect to the line segment L1 connecting the point Q6 (the detected point P9) and the unconfirmed point Q7 (the detected point P2), that is, whether or not unconfirmed point Q7 (detected point P2) can be an element of the convex polygon.

In this case, the left-inclined confirmation flag F2 is already set to "1". Thus, in step 30, the main processor 1 determines a convex polygon, which is obtained by successively connecting the detected points P2 (X2, Y2), P4 (X4, Y4), P3 (X3, Y3), P6 (X6, Y6), P10 (X10, Y10), P9 (X9, Y9), P2 (X2, Y2), corresponding to the coordinate data of the detected point remaining in the file of Fig. 7e as the elements of the convex polygon. Then, the main processor 1 sets thus obtained convex polygon as the detection region of the object to be detected or the retrieval window, and stores it accordingly (Refer to the portion indicated by solid line of Fig. 8r).

Fig. 8s shows an example of a retrieval window used in detecting of a circular object. In this case, each side of the convex polygon indicated with solid lines in Fig. 8r and specified in the step S30 is further offset outward by an amount of a radius of the circular object. As a result, a retrieval window enlarged by the radius of the circular object is newly obtained. By the way, all the flags and the file means are initialized upon the completion of the step S30.

The point Q1, which has been registered first in the file means, is originally the detected point P2. The angle, formed between the half-line GT and the half-line GPi, where i=1,2,---,n, is smallest at this detected point P2.

In this step, if the detected point P2 (X2, Y2), which is presently referred to as the second point Q7 (=Q1) in Fig. 8q, positions inside the convex polygon, for example at a point indicated by x, the line segment L2 (alternate long and short dash line) connecting the second point Q7 and the third point Q8 is inclined right with respect to the line segment L1 (alternate long and short dash line) connecting the first point Q6 and the second point Q7.

Therefore, the judgement in the step S13 is "NO", and the main processor 1 proceeds to the step S14 to make a judgement as to whether or not the final point connection confirmation flag F1 is reset to "0". As the flag F1 is already set to "1" in the previously described step S28, the main processor 1 proceeds to the step S15 to erase the coordinate value of the unconfirmed point Q1 from the file means as not constituting an apex of the convex polygon. The main processor 1 thereafter proceeds to a step S16 to decrement the data retrieval index i by 1 corresponding to the above deletion.

Then, the main processor 1 proceeds to the step S17 to delete the coordinate data of the point Qᵢ₊₁ (= Q7 = P2) referred to as the second point. Thereafter, the main processor 1 proceeds to the step S18 to shift all the coordinate data succeeding Qᵢ₊₁ upward one by one in the Qi column so as to fill up the vacant address occurred by the deletion of the data in step S18. In this case, the index i equals "6". That is, in a case such as that illustrated with a single-dot-and-dash line in Fig. 8q, not only the coordinate value of the point Q1 column but the coordinate value (X2, Y2) of the point Q7 are deleted from the Qi column of the file means. As a result, the content of the Qi column of Fig. 7e changes to the state of Fig. 7f. The main processor 1, then, proceeds to the step S19 to reset the left-inclined confirmation flag F2 to "0" and decrement the data retrieval index i by 1.

In this case, the index i equals 4 (= 6 - 1 - 1). After finishing the judgement in the step S20, the main processor 1 proceeds to the step S24 to make a judgement as to whether or not the coordinate data stored in the present point register Rn is identical with the coordinate data (X4, Y4) stored in the final point register Re. In this step, the coordinate value (X4, Y4) of the point Q8 shown in Fig. 7e is stored as the third point. Therefore, this data agrees with (X4, Y4). Hence, the main processor 1 proceeds to the step S25 for the necessary judgement. As the final point connection confirmation flag F1 is already set to "1", the main processor 1 proceeds to the step S29 to further make a judgement as to whether or not the left-inclined flag F2 is set to "1". As the left-inclined flag F2 is reset to "0", the main processor 1 returns to the step S10.

Returning to the step S10, the main processor 1 reads out the coordinate values of the points Qᵢ, Qᵢ₊₁ and Qᵢ₊₂ from the Qi column of the file means on the basis of the present value "4" of the index i. In this case, the content of the Qi column of the file means changes to the state of Fig. 7f. Therefore, the coordinate value (X10, Y10) of the detected point P10, which corresponds to the point Q5 of Fig. 12q, is read out as a first point Q4. The coordinate value (X9, Y9) of the detected point P9, which corresponds to the point Q6 of Fig. 12q, is read out as a second point Q5. And, the coordinate value (X4, Y4) of the detected point P4 is read out as a third point Q6, which corresponds to point Q8 of Fig. 8q.

Next, the main processor 1 proceeds to the step S11 to store the coordinate value (X4, Y4) of the point Qᵢ₊₂ into the present point register Rn. Subsequently, the main processor 1 proceeds to the step S12 to obtain the line segment L1 connecting the first point Qᵢ and the second point Qᵢ₊₁ and the line segment L2 connecting the second point Qᵢ₊₁ and the third point Qᵢ₊₂. Next, the main processor 1 proceeds to the step S13 to make a judgement as to whether or not the line segment L2 is inclined left with respect to the line segment L1. As the line segment L2 is inclined left with respect to the line segment L1 in this moment, the main processor 1 proceeds to the step S22 to increment the data retrieval index i by 1.

Next, the main processor 1 proceeds to the step S23 to set the left-inclined confirmation flag F2 to "1". More particularly, it is stored that the second point Qᵢ₊₁ constitutes a final apex of the convex polygon to be obtained. Subsequently, the main processor 1 proceeds to the step S24 to make a judgement as to whether or not the coordinate data stored in the present point register Rn is identical with the coordinate data stored in the final point register Re. In this processing, it is judged if the coordinate value of the third point Qᵢ₊₂ agrees with the coordinate value (X4, Y4) stored in the bottom of the file means.

In this instance, the coordinate value (X4, Y4) of the point Q6 shown in Fig. 7f is referred to as the third point. Accordingly, this data agrees with the value of (X4, Y4). Hence, the main processor 1 proceeds to the step S25 for the necessary judgement. As the final point connection confirmation flag F1 is already set to "1", the main processor 1 proceeds to the step S29 to make a judgement as to whether or not the left-inclined flag F2 is set to "1". In this case, the left-inclined confirmation flag F2 is already set to "1". Accordingly, it is assured that the point Qᵢ₊₁ (i.e. the point Q6 in Fig. 8q) constitutes an apex of the convex polygon to be obtained. Hence, the main processor 1 proceeds to the step S30 to determine the convex polygon, which is to be obtained by connecting in sequence all the coordinate values reserved in the file means of Fig. 7f, i.e. the detected points P4 (X4, Y4), P3 (X3, Y3), P6 (X6, Y6), P10 (X10, Y10), P9 (X9, Y9), P4 (X4, Y4). Thus obtained convex polygon is specified as a retrieval region, i.e. a retrieval window, for detecting an object to be detected. In this case, the shape of the convex polygon is formed by connecting points Q8, Q3, Q4, Q5, Q6 and Q8 of Fig. 8r.

In accordance with the present embodiment, a plurality of detected points P1, P2,---,Pn are photographed through the sampling operation. These detected points P1, P2, ---, Pn are detected one by one in a counterclockwise direction about the reference point G, which always lies in an area containing all the detected points P1, P2, ---, Pn. Any detected point, which retracts inward when constituting an apex of the polygon, is excluded. In other words, all the detected points, which protrude outward when constituting an apex of the polygon, are reserved as components of the convex polygon to be detected (Generally called as "convex closure construction method").

The detected points, finally reserved in the file means, are connected continuously in the counterclockwise direction in the order of input to the file to form the convex polygon. Thus obtained convex polygon is the smallest convex polygon formed by connecting all the outside detected points, as well as containing all the detection points P1, P2,----, Pn which have been obtained through the sampling operation.

It is preferable to make a file means whose data are inputted in descending order by the value the angle AGi formed between the positive direction of X-axis and a half-line connecting the reference point G and the detected point Pi. When making up a file by detecting the detected points P1-P2 (not in order) one by one in clockwise direction, the apexes at which the connected segments are right-inclined are stored as the constituting elements, but the rest of the processing is the same as that of the previous embodiment.

In detecting an object after completing the sampling and the setting of the retrieval window, all we have to do is detecting the object from the frame memory 6 within a limited region specified as retrieval window. Thus, there is no need of scanning the entire frame memory 6 upon photographing as was so in the prior art, so that the overall processing time of the image processing processor 3 required for detecting the object can be shortened. Furthermore, as the retrieval window is set as the convex polygon containing all the detected points obtained in the sampling operation, it becomes possible to secure a necessary and sufficient retrieval region, thereby eliminating the chances of the error such as missing the object which is out of the range of the retrieval window.

## Claims

1. A method of setting a retrieval window for detecting an object by the use of an image processing apparatus comprising steps of:
(a) sampling a position of an object to be detected, and storing coordinate data representing a plurality of detected points thus sampled;
(b) obtaining, in a coordinate plane, the smallest convex polygon containing all the detected points sampled in said step (a); and
(c) automatically setting said convex polygon as a retrieval region of said image processing apparatus for detecting of the object.

2. A method of setting a retrieval window in accordance with claim 1, wherein said convex polygon is formed by selectively connecting only the outermost detected points projecting outward.

3. A method of setting a retrieval window in accordance with claim 1, further comprising a step of:
(d) offsetting outward each side of said convex polygon obtained in said step (b) to obtain a convex polygon consisting of offset sides,
said step (c) including setting the convex polygon obtained in said step (d) as the retrieval region for detecting the object of said image processing apparatus.

4. A method of setting a retrieval window for detecting an object by the use of an image processing apparatus comprising steps of:
(e) sampling a position of an object to be detected, and storing coordinate data representing a plurality of detected points thus sampled;
(f) specifying, in a coordinate plane, a point lying within a contour of the smallest convex polygon containing all the detected points detected through said step (e) as a reference point;
(g) obtaining straight lines extending from said reference point to said detected points, and determining the detecting order of said detected points in descending order according to the degree of an angle formed between any predetermined half-line and each of said straight lines in a counterclockwise direction for registration in the file;
(h) reading out three detected points, namely, first, second and third, points from said file means in accordance with said detecting order;
(i) obtaining a first line segment connecting said first and second points and a second line segment connecting said second and third points, and making a judgement as to whether or not said second line segment is inclined left with respect to said first line segment;
(j) reading out three detected points from said file means in accordance with said detecting order so that said second point becomes a first point when the result of said judgement is YES in said step (i), or
deleting said second point from said file means and reading out three detected points from said file means in accordance with said detecting order so that said first point becomes a first point again when the result of said judgement is NO in said step (i) and said first point positions in the head of said file means, or
deleting said second point from said file means and reading out three detected points from said file means in accordance with said detecting order so that said first point becomes a second point when the result of said judgement is NO in said step (i) and said first point does not position in the head of said file means,
(k) repeating said steps (i) and (j) until all of said detected points stored in said file means have been read out as a second point;
(l) obtaining a convex polygon by connecting all the detected points, finally remained in said file means, in accordance with said detecting order; and
(m) setting said convex polygon obtained through said step (l) as a retrieval region of said image processing apparatus for detection of the object.

5. A method of setting a retrieval window in accordance with claim 4, wherein said step (f) selects any three points among said plurality of detected points stored in said step (e) and obtains a center-of-gravity point of thus selected three points so as to store this center-of-gravity point as reference point.

6. A method of setting a retrieval window in accordance with claim 4, further comprising steps of:
(n) offsetting outward each side of said convex polygon obtained in said step (l) outward so as to obtain a convex polygon consisting of offset sides; and
said step (m) for setting the convex polygon obtained through said step (n) as the retrieval region of said image processing apparatus for detection of the object.

7. A method of setting a retrieval window for detecting an object by the use of an image processing apparatus comprising steps of:
(o) sampling a position of an object to be detected, and storing coordinate data representing a plurality of detected points thus sampled;
(p) specifying, in a coordinate plane, a point residing within a contour of the smallest convex polygon containing all the detected points detected through said step (o), and storing this point as a reference point;
(q) obtaining straight lines extending from said reference point to said detected points, and determining the detecting order of said detected points in ascending order according to the degree of an angle formed between any predetermined half-line and each of said straight lines in a counterclockwise direction with respect to said half line, and registering said detected points in a file means in accordance with this detecting order;
(r) reading out three detected points, namely, first, second and third points from said file means in accordance with said detecting order;
(s) obtaining a first line segment connecting said first and second points and a second line segment connecting said second and third points, which have been read out previously, and making a judgement as to whether or not said second line segment is inclined right with respect to said first line segment;
(t) reading out three detected points from said file means in accordance with said detecting order so that said second point becomes a first point when the result of said judgement is YES in said step (q), or
deleting said second point from said file means and reading out three detected points from said file means in accordance with said detecting order so that said first point becomes a first point again when the result of said judgement is NO in said step (q) and said first point positions in the head of said file means, or
deleting said second point from said file means and reading out three detected points from said file means in accordance with said detecting order so that said first point becomes a second point when the result of said judgement is NO in said step (q) and said first point does not position in the head of said file means;
(u) repeating said steps (q) and (r) until all of said detected points stored in said file means have been read out as a second point;
(v) obtaining a convex polygon by connecting all the detected points, finally remained in said file means, in accordance with said detecting order; and
(w) setting said convex polygon obtained through said step (t) as a retrieval region of said image processing apparatus for detection of the object.

8. A method of setting a retrieval window in accordance with claim 7, wherein said step (p) selects any three points among said plurality of detected points stored in said step (o) and obtains a center-of-gravity point of thus selected three points so as to store this center-of-gravity point as said reference point.

9. A method of setting a retrieval window in accordance with claim 7, further comprising steps of:
(x) offsetting outward each side of said convex polygon obtained in said step (v) so as to obtain a convex polygon consisting of offset sides; and
said step (w) for setting the convex polygon obtained through said step (x) as the retrieval region of said image processing apparatus for detection of the object.
